# EUROPEAN PATENT APPLICATION

(11) **EP 0 849 323 A1**
(43) Date of publication of application: **24.06.1998**
(21) Application number: 97122120.5
(22) Date of filing: 16.12.1997
(51) Int. Cl.: C08L 23/08

(54) **Blow moldable dynamically vulcanized alloys**

(30) Priority: 20.12.1996 US 771631
(71) Applicant: Advanced Elastomer Systems, L.P., Akron, Ohio 44311-1059 (US)
(72) Inventor: Finerman, Terry M., Akron, Ohio 44333 (US)
(74) Representative: Weber, Thomas, Dr.Dipl.-Chem.

(57) **Abstract**

Blow moldable thermoplastic compositions prepared by blending an ethylene copolymer resin with a natural or EPDM rubber and dynamically vulcanizing the rubber. The ethylene copolymer resin is a copolymer of ethylene with vinyl acetate, copolymers of ethylene with methyl acrylate, copolymers of ethylene with alpha, beta monoethylenically unsaturated monocarboxylic acid as well as copolymers of ethylene with alkyl esters of said acids. The preferred copolymer is ethylene vinyl acetate copolymer. Additional thermoplastic ethylene polymers are also added to the thermoplastic composition. These thermoplastic compositions have shown to be blow moldable via extrusion blow molding processes.

## Description

### BACKGROUND OF THE INVENTION

1. Field of the Invention. The pent invention relates to polymer blends which have a combination of both elastic and thermoplastic properties which allow them to be blob molded. More particularly, the present invention relates to dynamically vulcanized alloys (DVAs) wherein a rubber is dispersed into a thermoplastic ethylene copolymer resin, and subsequently vulcanized by dynamic vulcanization techniques utilizing a non-peroxide curing system. Compositions of the present invention then fully cured manifest unexpected softness characteristics and melt strengths which allow them to be blow molded.

2. Prior Art. Polymer blends which have a combination of both elastic and thermoplastic properties are of significant commercial interest. Such thermoplastic elastomeric compositions are generally obtained by blending elastomeric polymer with a thermoplastic resin in a way such that the elastomer is intimately and uniformally dispersed as a discrete or co-continuous phase within a continuous or co-continuous phase of the thermoplastic polymer. These polymer blends have been given the generic designation of thermoplastic elastomers. They exhibit some of the properties of a cured elastomer as well as a reprocess ability of a thermoplastic resin. The elastomeric characteristics are enhanced if one component of a blend is a vulcanizable elastomer which is wholly or partially cross-linked.

The earliest work in the curing of a thermoplastic elastomer composition was by Gessler and Haslett in U.S. Patent No. 3,037,954, wherein a vulcanizable elastomer is dispersed into a resinous thermoplastic polymer subsequently cured while continuously mixing and shearing the polymer blend. The result is a micro gel dispersion of cured rubber in an uncured matrix of resinous thermoplastic polymer.

Gessler's U.S. Patent No. 3,037,954 discloses compositions comprising of polypropylene and a rubber such as, for example, butyl rubber, chlorinated butyl rubber, polybutadiene, polychloroprene and polyisobutene. Compositions of about 50 to 95 parts polypropylene and about 5 to 50 parts of rubber are disclosed.

Since these beginnings, numerous developments have taken place in the art of dynamically vulcanized alloys (DVAs). These developments are generally directed towards the improvement and customizing of DVAs for specific uses. In particular, attention has focused on the need for a soft, low Shore A hardness dynamically vulcanized alloy DVA having good flow properties and melt strength.

U.S. Patent No. 4,894,408 discloses thermoplastic compositions comprising of ethylene copolymer resin and a dynamically vulcanized fully cured EPDM rubber. The ethylene copolymer resin may be a copolymer of ethylene with vinyl acetate, copolymers of ethylene with methyl acrylate, copolymers of ethylene with alpha, beta monoethylenically unsaturated monocarboxylic acids and copolymers of ethylene with alkyl esters of said acids.

U.S. Patent No. 4,978,717 discloses thermoplastic compositions comprising a blend of an ethylene-hexadiene and/or an ethylene-butene copolymer resin, with a rubber composition which is dynamically vulcanized to form a heat shrinkable dynamically vulcanized alloy of low hardness.

U.S. Patent No. 5,051,478 discloses a dynamically vulcanized composition comprising a polyolefin resin, and elastomer and an ethylene copolymer resin such as a copolymer of ethylene and vinyl acetate or an alkyl acrylate. The ethylene copolymer resin is added to the dynamically vulcanized composition after the dynamic vulcanization step. The resulting composition comprises the ethylene copolymer resin predominately in the polyolefin resin phase.

Attempts to provide a softer, lower durometer, thermoplastic elastomer blend product while resulting in thermoplastic elastomers having low Shore A hardnesses do not result in producing a thermoplastic elastomer with a melt strength which allowed for the composition to be blow molded. Thermoplastic elastomer compositions in accordance with the invention possess exceptionally low hardness, flexibility and elasticity. Further the thermoplastic elastomer compositions of the present invention are completely rheologically stable at the elevated temperatures that are typically employed in processing such compositions by blow molding.

### SUMMARY OF THE INVENTION

In accordance with the invention there is provided a thermoplastic olefin composition comprising a rubber selected from the group consisting of EPDM, buryl rubber, chloroprene rubber, chlorosulphonated polyethylene rubber, polyisoprene, silicone rubber, ethylene-propylene rubber and halogenated rubbers, folly cured by dynamic vulcanization in a thermoplastic resin consisting of from 1 to 66.7 wt% of an ethylene copolymer resin selected from the group consisting of copolymers of ethylene with vinyl acetate, copolymers of ethylene with methyl acrylate, copolymers of ethylene with alpha, beta monoethylenically unsaturated monocarboxylic acids and copolymers of ethylene with alkyl ester of said acids and consisting of 33.3 to 99 wt% of at least one additional polyolefin resin selected from a group consisting of high density polyethylene, linear low density polyethylene, very low density polyethylene or polypropylene and wherein the composition is blow moldable.

### DETAILED DESCRIPTION OF THE INVENTION

This invention relates to dynamically vulcanized thermoplastic alloy compositions, herein also referred to as DVAs, which generally comprise a thermoplastic phase and elastomeric phase. Because these alloys comprise both a thermoplastic phase and elastomeric phase they are also commonly referred to as thermoplastic elastomer compositions.

The general process for producing dynamically vulcanized thermoplastic compositions is well known in the art. The resin, at least one elastomer, fillers, additives, etc. and curing agents are subjected to dynamic vulcanization or the resin, elastomer, filler and additives are premixed, and subsequently subjected to dynamic vulcanization in the presence of a curing agent. The later process generally includes the steps of: pairing an initial mix of resin, at least one elastomer, fillers, stabilizers, plasticizers, etc.; bringing the initial mix to flux and mixing to the desired level of dispersion; adding curatives to the elastomer; increasing the temperature of the mix to the range necessary for dynamic vulcanization to occur; completing the dynamic vulcanization while continuing the mix at high shear rates; finally removing the blend from the vulcanization zone maintained at vulcanization temperature, cooling and then pelletizing the DVA product. In the conventional process, the fillers and additives are generally added prior to the addition of curing agents for vulcanization of elastomer, that is, prior to the dynamic vulcanization step.

As used herein, the term dynamic vulcanization means a vulcanization process for a mixture of rubber and thermoplastic polyolefin resin, wherein the rubber is vulcanized under conditions of high shear in the presence of the thermoplastic polyolefin resin, as a result of which, the rubber is simultaneously cross-linked and dispersed as fine particles of a "micro gel" within the thermoplastic polyefin resin matrix. Dynamic vulcanization is affected by mixing the mixtures ingredients at a temperature that is at or above the curing temperature of the rubber in equipment such as roll mills, Banbury mixers, continuous mixers, kneaders or mixing extruders, for example: twin screw extruders. The unique characteristics of a dynamically cured composition is that, notwithstanding the fact that the rubber component may be folly cured, the compositions can be processed and reprocessed by conventional rubber processing techniques such as extrusion, injection molding, compression molding and as herein described, blow molding. Scrap or flashing from these processes can be salvaged and reprocessed.

The term "dynamically vulcanized alloy" hereinafter referred to as DVA is used herein to denote a composition comprising at least one thermoplastic resin and at least one rubber wherein at least one rubber has been dynamically vulcanized to at least a partially cured state. DVA compositions are prepared by blending together thermoplastic resin and rubber with curatives and fillers under conditions of dynamic vulcanization.

The term "thermoplastic resin" as used herein denotes any polyolefin resin which exhibits thermoplastic properties. The preferred polyolefin resin is a mixture of copolymers of ethylene with vinyl acetate (EVA) and linear low density polyethylene (LLDPE). Other polyolefin homopolymer and copolymers of ethylene can be utilized in the practice of this invention. Such other polyolefins include low density polyethylene (LDPE), very low density polyethylene (VLDPE), high density polyethylene (HDPE), polypropylene (PP), polybutylene (PB), stereo-irregular polypropylene, or styrenic block copolymers. Generally, any resin with a peak melting point of less than 126°C can be used in conjunction with the ethylene copolymer resin. The peak melting point is determined by thermally conditioning a film of polymer by heating it to at least 50°C above its melting temperature and then cooling it at a rate of 10°C/min to room temperature. The polymer is then heated at a rate of 10°C/min and the heat flow into the sample is measured. The peak melting point is the temperature at which the heat flow reaches a maximum.

As used herein the term polypropylene includes homopolymers of propylene as well as reactor copolymers of polypropylene which can contain about 1 to about 20 wt % ethylene or and alpha olefin comonomer of 4 to 16 carbon atoms.

The term "low density polyethylene" or "LDPE" as used in the specification and claims means both low and medium density polyethylene having densities of about 0.910 to about 0.940 g/cc. LDPE is generally produced at high pressures and high temperatures (100°C - 300°C), resulting in a material with both long chain branching and short chain branching. The term includes copolymers of ethylene where the long chain branching is primarily due to the polymerization process.

The term "very low density polyethylene" or "VLDPE" as used in the specification and claims means polyethylene having a density of below about 0.910 g/cc. VLDPE includes copolymers of ethylene with higher olefins which are thermoplastic resins. Some VLDPE materials are produced with special catalysts, such as metallocene catalyst, in order to incorporate higher concentrations of the higher olelins such as hexene, butene and octene.

The term "linear low density polyethylene" (LLDPE) as used in the specification and claims means copolymers of ethylene with higher olefins characterized by little, if any, long chain branching. LLDPE has a density of above about 0.910 to below about 0.955 g/cc. The processes for producing LLDPE are well known in the art and commercial grades of this polyolefin resin are available. Generally, it is produced in gas-phase fluidized bed reactors or liquid-phase solution process reactors, the former process can be carried out at pressures of about 100 to 300 psi and temperatures as low as 100°C.

High density polyethylene (HDPE), useful as the polyolefin resin of this invention, has a density of about 0.940 to about 0.965 g/cc. HDPE includes both homopolymers of ethylene and copolymers of ethylene usually containing less than about 1 wt% higher olefin. High density polyethylene is an established product of commerce and its manufacture and general properties are well known to the art. Typically, HDPE has a relatively broad molecular weight distribution, characterized by the ratio of weight average molecular weight to number average molecular weight of from about 7 to about 50.

The term "polybutylene" as used in the specification and claims includes thermoplastic resin which are both poly (1-butene) homopolymers and copolymers with, for example, ethylene, propylene, pentene- 1, etc. Polybutylene is manufactured via stereospecific Ziegler-Natta polymerization of monomer(s). Commercially useful products are high molecular weight and isotacticity. A variety of commercial grades of both homopolymer and ethylene-butene- 1 copolymer are available with melt indices that range from about 0.3 to about 20g/10 min.

The term "ethylene copolymer resin" as used in the specification and claims means copolymers of ethylene with an alkyl ester of an alpha, beta monoethylenically unsaturated monocarboxylic acid as well as copolymers with the acid per se. In particular, copolymers of ethylene with vinylacetate or alkyl acrylates, for example methyl acrylate, ethyl acrylate and butyl acrylate. These ethylene copolymers can comprise from about 70 to about 98 wt% ethylene, preferably from about 70 to 95 wt% ethylene, more preferably from about 73 to about 91 wt% ethylene, the balance of the copolymer being the alkyl ester. The expression "EVA" means, specifically, ethylene-vinylacetate copolymers. The ethylene-copolymer resins suitable for use in the practice of this invention have a melt index of from about 0.2 to about 50 (ASTM D 1238 Condition E).

The curable rubbers which can be used in the practice of this invention include both synthetic and natural rubbers and blends thereof. At least one of the rubbers utilized must be vulcanizable. Illustrative non-limiting examples of rubbers suitable for use in the practice of this invention include butyl rubber, halogenated rubber, ethylene propylene diene rubber (EPDM), polyisoprene, polychloroprene, styrene butadiene rubber, chlorosulphonated polyethylene, silicone rubber, ethylene -propylene rubber, etc.

The term "rubber" as used in the specification and claims means any natural or synthetic polymer which can be vulcanized or cured so as to exhibit elastomeric properties. Since plastomeric ethylene copolymer will peroxide cure and therefore lose its thermoplastic properties, rubber such as ethylene propylene copolymer (EPM) which require a peroxide cure should not be used as a curable rubber component in the practice of this invention. Also unsuitable are polar rubbers such as nitrile rubbers.

The term polyisoprene as used in the Specification and Claims includes rubbers commonly referred to as natural rubber and synthetic polyisoprene. Polyisoprene is a polymer containing predominantly isoprene monomer units. The monomer usually polymerizes by cis-1,4 addition, trans-1,4 addition, or 3,4 addition, although other configurations are possible. In general, synthetic polyisoprenes contain mixtures of the various monomer additions, but are classified as either cis-1 ,4 polyisoprene or trans- 1,4 polyisoprene depending on the majority type of monomer addition. Also of commercial significance are naturally occurring polyisoprenes which include natural rubber. Natural rubber is derived from the latex of a number of plants, particularly the Havea brasiliensis. Natural rubber latex contains about 36% cis-1,4 polyisoprene, 59% water, with the remainder composed of proteins, carbohydrates, lipids, inorganic constituents, and other organic constituents. When dried, the natural rubber contains about 94 wt. % polyisoprene which is nearly completely made up of cis-1 ,4 polyisoprene units.

The terms EPM arid EPDM are used in the sense of their ASTM designations. EPM is an ethylene-propylene copolymer rubber which can be cross-linked by radiation curing or peroxide curing. EPDM is terpolymer of ethylene, propylene and a non-conjugated diene. Illustrative non-limiting examples of suitable non-conjugated dienes are 5-ethylidene-2-norbornene (ENB); 1 ,4-hexadiene; 5-methylene-2-norbornene (MNB); 1,6-octadiene; 5-methyl-1,4-hexadiene; 3,7-dimethyl-1,6-octadiene; 1,3-cyclopentadiene; 1,4-cyclohexadiene; tetrahydroindene; methyletrahydroindene; dicyclopentadiene; 5-isopropylidene-2-norbomene; 5-vinyl-norbornene; etc.

Butyl rubber is a copolymer of an isoolefin and a conjugated multiolefin. The useful rubber copolymers comprise a major portion of isoolefin and a minor amount, preferably not more that 30 wt%, of a conjugated multiolefin. The preferred rubber copolymers comprise about 85-99.5 wt% (preferably 95-99.5 wt%) of a C₄-isoolefin, such as isobutylene, and about 15-0.5 wt% (preferably 5-0.5 wt%) of a multiolefin of about 4-14 carbon atoms. These copolymers are referred to in the literature as "butyl rubber". See for example, the textbook *Synthetic Rubber* by G. S. Whitby (1954 edition by John Wiley and Sons, Inc.) pages 838-891, etc. The terms "butyl rubber" as used in the specification and claims includes the aforementioned copolymers of an isoolefin having 4-7 carbon atoms and about 0.5 to 20 wt% of a conjugated multiolefin of about 4-10 carbon atoms. Preferably these copolymers contain about 0.5 to about 5% conjugated multiolefin. The preferred isoolefin is isobutylene. Suitable conjugated multiolefins include isoprene, butadiene, dimethyl butadiene, piperylene, etc. Commercial butyl rubber is a copolymer of isobutylene and minor amounts of isoprene.

Butyl rubber as above described may be halogenated with front about 0.1 to about 10, preferably, about 0.5 to about 3.0 wt% chlorine or bromine. The chlorinated species of butyl rubber is commonly referred to as chlorinated butyl rubber.

The ethylene copolymer resin component of the polyolefin resin used in the practice of this invention comprises from about 1 to 66.7 wt% of the polyolefin resin component of the blend. When the ethylene homopolymer resin component includes LDPE, LLDPE, VLDPE, or HDPE or polybutylene materials the amount utilized will be from 33.3 to 99 wt% of the polyolefin resin component.

In its most preferred embodiment, the polyolefin resin component of the DVA composition of this invention consist of EVA. In the preferred embodiment the rubber component of the DVA composition of the invention consists of EPDM rubber. EVA polyolefin resin is blended with at least one EPDM rubber and the EPDM rubber component of the blend is vulcanized using dynamic vulcanization techniques. The EVA polyolefin resin combined with the selected homopolymer comprises from about 27 to about 55 wt% of the polyolefin resin plus rubber in the DVA; preferably from about 30 to 55 wt% resin; more preferably from about 32 to about 55 wt% resin. The rubber component of the DVA composition comprises from about 45 to 73 wt% of the composition based on the polyolefin resin plus EPDM rubber.

Where it is desired to prepare a DVA composition of this invention to produce a blow molded article, the polyolefin resin preferably comprises at least 30 - 32 wt% by weight of the total polyolefin resin plus rubber components of the DVA.

The polyolefin resin component preferably comprises at least 12.8 wt% of the total composition, that is, polyolefin resin component plus rubber and additives.

In addition to its polymer components, the DVA composition of this invention can include reinforcing and non-reinforcing fillers, antioxidants, stabilizers, rubber processing oils, lubricants, anti-blocking agents, anti-static agents, waxes, coupling agents for the fillers, forming agents, pigments, flame retardant additives and other processing aids known to the rubber compounding an. The pigments and fillers can comprise up to 60 wt% of the total DVA composition based on the polymer components plus additives.

Fillers can be inorganic fillers of the reinforcing or non-reinforcing apes. In organic reinforcing fillers, such as hydrated silica, hydrated calcium silicates can be used as well as non-reinforcing calcium carbonates or titanium dioxide fillers. Clays can also be used as fillers. Organic fillers such as carbon black can be used, such as channel blacks, ferrous blacks, thermo blacks, acetylene blacks, lamp black and the like.

Rubber process oils have particular ASTM designations depending on whether they fall into the class of paraffinic, naphthenic or aromatic process oils. Rubber process oils are derived from petroleum fractions, and the particular type of process oil utilized will be that customarily used in conjunction with the rubber component. The ordinarily skilled rubber chemist will recognize which type of oil which should be utilized with a particular rubber. The quantity of rubber process oil utilized is based on the total rubber content, both cured and uncured, and can be defined as the ratio, by weight, of process oil to the total rubber in the DVA. This ratio may range from about above 0 to about 1.5/1, preferably about 0.2/1 to about 1.0/1; more preferably about 0.3/1 to about 0.8/1. Larger amounts of process oil can be used, the deficit being reduced physical strength of the composition. Oils other than petroleum based oils, such as oils derived from coal tar and pine tar, can also be utilized. In addition to the petroleum derived rubber process oils, organic esters and other synthetic plasticizers may be used.

Antioxidants can be utilized in the composition of this invention. The particular antioxidant utilized will depend on the rubbers utilized and more than one type may be required. Their proper selection is well within the ordinary skill of the rubber processing chemist. Antioxidants will generally fall into the class of chemical protectors or physical protectants. Physical protectants are used where there is to be little movement in the part to be manufactured from the composition. These are generally waxy materials which impart a "bloom" to the surface of the rubber part and form a protective coating to shield the part from oxygen, ozone, etc.

The chemical protectors generally fall into three chemical groups; secondary amines, phenolics and phosphites. Examples of types of antioxidants useful in the practice of this invention are hindered phenols, amino phenols, hydroquinones, alkydiamines, amine condensation products, etc. Nonlimiting examples of these and other types of antioxidants are styrenated phenol; 2,2'-methylene-bis(4-methyl-6-1, butylphenol); 2,6'-di-t-butylo-dimethylamino-p-cresol; hydroquinone monobenzyl ether; octylated diphenyl amine; phenyl-beta-naphthylamine; N,N'-diphenylethylene diamine; aldol-alpha-naphthylamine; N,N'-diphenyl-p-phenylene diamine; etc. The physical antioxidants include mixed petroleum waxes and microcrystalline waxes. All or a portion of the fillers and/or additives can be added before the dynamic vulcanization step or after the dynamic vulcanization step.

Any conventional cure system for the rubber to be dynamically vulcanized can be used. Traditionally peroxide cures were specifically excluded from use in dynamic vulcanization because the peroxide would cause these thermoplastic resins themselves to cross-link. For example, when ethylene-hexene polymer is the thermoplastic resin, it would itself vulcanize, thereby resulting in a fully cured non-thermoplastic composition. However the inventor has experimentally determined that peroxide cures can be used with thermoplastic resins and certain suitable rubbers. These rubbers include polyisoprene. It is theorized that when using these rubbers there are enough double bonds to react with the peroxide so as to prevent the attack of the peroxide on the thermoplastic resin.

Any particular curatives known in the art for the vulcanization of rubbers are suitable. The cures include both sulfur as well as non-sulfur cures. For example, halogenated butyl rubber can be cured using zinc oxide. Accelerators such as dithiocarbamates or thiurams and thioureas may be included in these zinc oxide cures. Zinc oxide free cures of halogenated butyl rubber known to the art can also be utilized. For example, such vulcanizing systems comprise litharge, 2-mercaptoimidazoline and diphenyl guanidine.

Resin cures can be used for polyisoprene, butyl rubber, halogenated butyl rubber and the EPDM rubbers. The resins useful as curatives are phenolic resins, brominated phenolic resins, urethane resins, etc. The halogenated resin cure systems are generally metal activated where the rubber is an EPDM.

While phenolic resin cures are suitable cures, they impart a yellowish or orangish tinge to the rubber part. For halogenated butyl rubber, a preferred cure is one based on ZnO and/or MgO. Such cures permit the use of pigments such as TiO₂ to give bright white compositions. In this system, the MgO acts not as an accelerator but as an acid acceptor to stabilize the rubber from dehydrohalogenation.

It is within the scope of this invention to incorporate an uncured rubber in the composition. This can be accomplished by selecting as the uncured rubber a rubber which cannot be vulcanized by the vulcanizing agent used to cure the cured rubber which is to be dynamically vulcanized. For the cured rubbers of the present invention, where the cure system comprises sulfur or phenolic resins, any other rubber not vulcanizable can be included. Such rubbers include completely saturated EP rubber, polyisobutylene rubber and the like. In another embodiment the DVA can be prepared from the cured rubber to be dynamically vulcanized. After vulcanization a second uncured rubber can be blended into the DVA at a temperature above the melting point of the resin.

In another embodiment of this invention, two rubbers are blended together and the cured rubber is dynamically vulcanized using a curative which is not a vulcanizing agent for the other rubber, thereby forming a composition comprising a fully vulcanized rubber dispersed within the unvulcanized rubber. This composition can then be let down into an ethylene copolymer to form the composition of this invention.

In a variant of this invention a cured rubber is dynamically vulcanized while in intimate contact with an ethylene copolymer utilizing an excess of vulcanizing agent to form the DVA of this invention. Thereafter, additional rubber is added and dynamically vulcanized, the quantity of curative having been preselected to ensure that it is inadequate to fully vulcanize the additional rubber.

In another variant, the DVA of this invention is prepared using an ethylene copolymer and cured rubber. Subsequently, under conditions of dynamic vulcanization a second rubber is added to the DVA with only sufficient curative to partially cure the second rubber. For example, EVA and an EPDM are blended and a sulfur curative added. The EPDM is dynamically vulcanized to form the DVA of this invention. Subsequently, chlorobutyl rubber is added with just sufficient ZnO to only partially cure the chlorinated butyl rubber.

Where an uncured rubber is included in the DVA composition of invention, it comprises from 0 to 50 wt % of the total rubber in the composition, preferably from about 5 to about 20 wt%.

In a preferred embodiment, the rubber to be vulcanized is EPDM rubber which is preferably vulcanized with resin cures.

In the practice of this invention the polyolefin resin and EPDM rubber are mixed together at a temperature sufficient to soften the resin, or more commonly, at a temperature above its melting point where the resin is at least partially crystalline at room temperature, e.g., EVA. After the resin and rubbers are intimately mixed, the curative is added. Heating and masticating at vulcanization temperatures are generally adequate to complete vulcanization in about 0.5 to about 10 minutes. The vulcanization time can be reduced by elevating the temperature of vulcanization. A suitable range of vulcanization temperatures is from about the melting point of the resin (about 90-110°C. in the case of EVA) to about 250°C; more typically, the temperature range is from about 150°C to about 225°C. Preferably the vulcanization is carried out at a temperature of from about 160°C to about 200°C. Of course, one skilled in the art would need to select the appropriate vulcanization temperature for the selected plastic and rubber.

It is preferred that the mixing process be continued until vulcanization is complete. If vulcanization is permitted to continue after mixing has stopped, the composition may not be reprocessible as a thermoplastic. However, the dynamic vulcanization can be carried out in stages. For example, vulcanization can be commenced at high temperatures in a twin screw extruder and before vulcanization is complete pellets can be formed of the partially prepared DVA using an underwater pelletizer, thereby quenching the curing step. At a later time vulcanization can be completed under dynamic vulcanization conditions. those skilled in the art will appreciate the approximate quantities, types of curatives and extent of mixing time required to carry out the vulcanization of the rubber. Where necessary the rubber can be vulcanized using varying amounts of curative to determine the optimum cure system to be utilized and the appropriate cure conditions to achieve a full cure.

While it is preferred that all components are present in the mix prior to carrying out the dynamic vulcanization process of this invention, this is not a necessary condition. For example, if a rubber is present which does not cure utilizing the selected curing agents, only the rubbers need be mixed thoroughly, followed by dynamic vulcanization in the absence of polyolefin resin. After vulcanization is complete, the dynamically vulcanized blend of rubbers can be let down into an ethylene copolymer resin to prepare the compositions of this invention.

The term "fully vulcanized" as used in the specification and claims with respect to the dynamically vulcanized rubber component of this invention means that the rubber component to be vulcanized has been cured to a state in which the physical properties of the rubber are developed to impart elastomeric properties to the rubber generally associated with the rubber in its conventionally vulcanized state. The degree of cure of the vulcanized rubber can be described in terms of gel content or conversely extractable components. Alternatively, the degree of cure can be expressed in terms of cross-link density.

Where the determination of extractables is an appropriate measure of the state of cure, the improved thermoplastic elastomeric compositions are produced by vulcanizing the curable rubber component blends to the extent that the composition contains no more than about four percent by weight of the cured rubber component extractable at room temperature by a solvent which dissolves the rubber which is intended to be vulcanized, and preferably to the extent that the composition contains less than two percent by weight extractable. In general, the less extractables of the cured rubber component, the better are the properties and still more preferable are compositions comprising essentially no extractable rubber from the cured rubber phase (less than 0.5 weight percent). Gel content reported as percent gel is determined by a procedure which comprises determining the amount of insoluble polymer by soaking the specimen for 48 hours in organic solvent at room temperature and weighing the dried residue and making suitable corrections based upon knowledge of the composition. Thus, corrected initial and final weights are obtained by subtracting from the initial weight, the weight of the soluble components, other than the rubber to be vulcanized, such as extender oils, plasticizers and components of the composition soluble in organic solvent, as well as that rubber component of the DVA which it is not intended to cure. Any insoluble pigments, fillers, etc., are subtracted from both the initial and final weights.

To employ cross-link density as the measure of the state of cure which characterizes the improved thermoplastic elastomeric compositions, the blends are vulcanized to the extent which corresponds to vulcanizing the same rubber as in the blend statically cured under pressure in a mold with such amounts of the same curatives as in the blend and under such conditions of time and temperature to give an effective cross-link density greater than about 3 x 10^{⁻5} moles per milliliter of rubber and preferably greater than about 5 x 10⁻⁵ or even more preferably 1 x 10⁻⁴ moles per milliliter of rubber. The blend is then dynamically vulcanized under similar conditions with the same amount of curative based on the rubber content of the blend as was required for the rubber alone. The cross-link density so determined may be regarded as a measure of the amount of vulcanization which gives the improved thermoplastics. However, it should not be assumed, from the fact that the amount of curative is based on the rubber content of the blend and is that amount which gives the rubber alone the aforesaid cross-link density, that the curative does not react with the resin or that there is no reaction between the resin and the rubber. There may be highly significant reactions involved but of limited extent. However, the assumption that the cross-link density determined as described provides a useful approximation of the cross-link density of the thermoplastic elastomeric compositions is consistent with the thermoplastic properties and with the fact that a large portion of the resin can be removed from the composition by high temperature solvent extraction, for example, by boiling decalin extraction.

The cross-link density of the rubber is determined by equilibrium solvent swelling using the Flory-Rehner equation. *J. Rubber Chem and Tech*., 30, p. 929. The appropriate Huggins solubility parameters for rubber-solvent pairs used in the calculation were obtained from the review article by Sheehan and Bisio, *J. Rubber Chem. & Tech*., 39, 149. If the extracted gel content of the vulcanized rubber is low, it is necessary to use the correction of Bueche wherein the term y is multiplied by the gel fraction (%gel/100). The cross-link density is half the effective network chain density y determined in the absence of resin. The cross-link density of the vulcanized blends will, therefore, be hereinafter understood to refer to the value determined on the same rubber as in the blend in the manner described. Still more preferred compositions meet both the aforedescribed measures of state of cure, namely, be estimations of cross-link density and percent of rubber extractable.

The advantages of the latest invention would be more readily appreciated by reference to the following examples. Ingredients used in the examples are described in Table 2.

The compositions in Table 1 were mixed in a twin screw extruder and underwater pelletized. The blends were dynamically vulcanized by adding the curative at a location in the twin screw extruder after the polymer had become well mixed. The mean residence time in the twin screw extruder was 60 - 120 seconds.

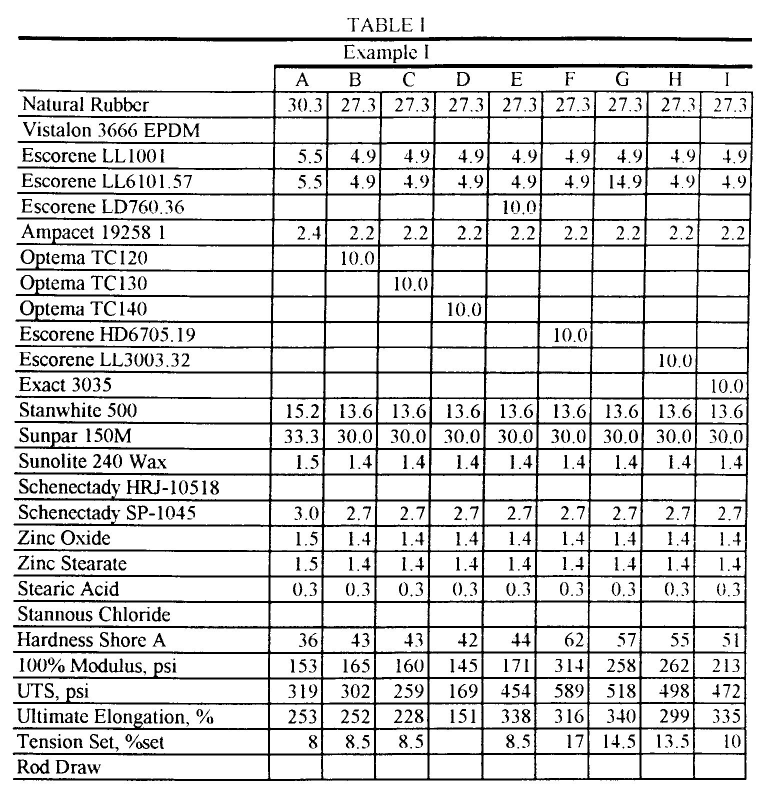

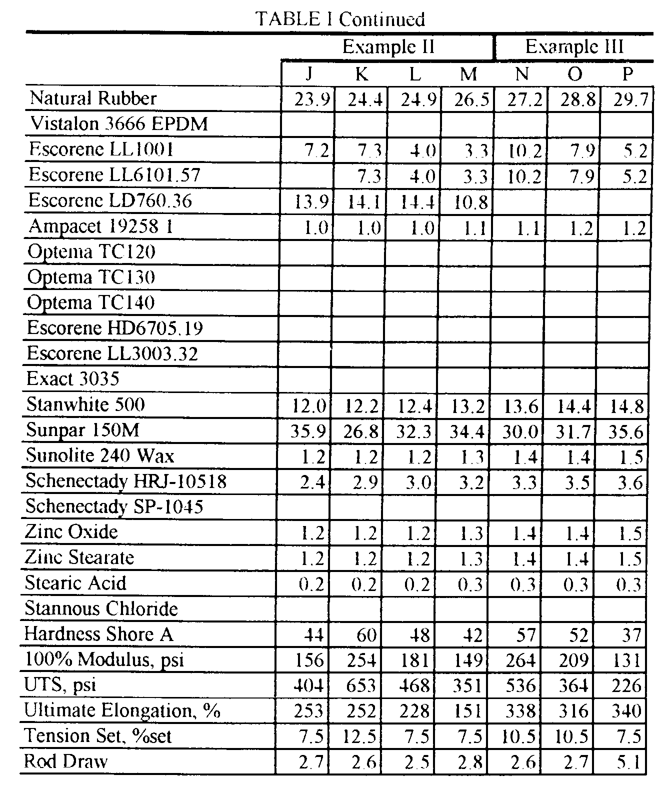

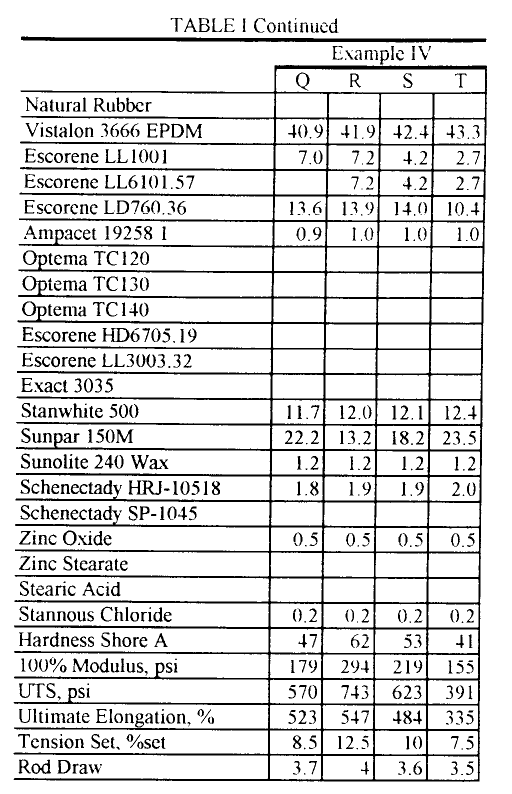

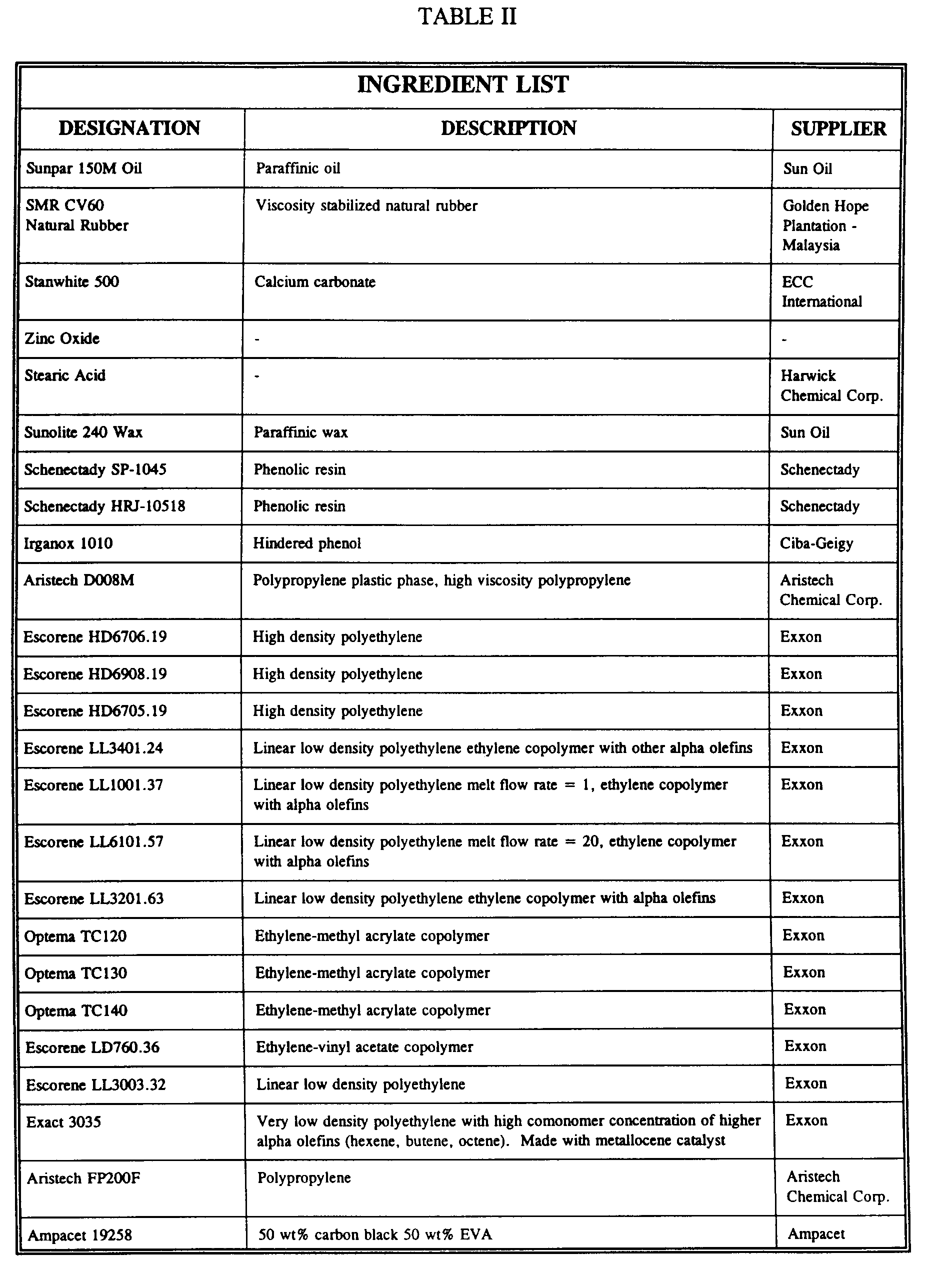

**TABLE III**

| | |
|---|---|
| Shore A hardness, instanstaneous | ASTM D2240 |
| 100% Modulus, PSI | ASTM D412 |
| UTS, PSI | ASTM D412 |
| Ultimate Elongation, % | ASTM D412 |
| Tension Set, % set | ASTM D412 |
| Rod Draw | Test method utilizes: a 1 inch extruder which feeds the material through a .186 inch diameter circular die, and a 10 inch diameter drum which rotates at a variable RPM. The extruder is fitted with a single stage screw of L/D of 24:1 and a compression ratio 4:1 The extruder screw speed is set to 20 RPMs. Material is extruded and the extruded material rod is strung onto the pulley wheel. The extruder screw speed is maintained at 20 RPM while the pulley wheel drum RPM is allowed to increase until the extruded rod breaks. When the rod breaks the drum speed is recorded. |

Example I shows many ternary DVA blends (rubber, EVA resin and an additional thermoplastic resin component). These examples show the effect of different thermoplastic resins when added to the plastic phase in conjunction with EVA. Generally the Shore A hardness of the DVA material increases with the addition of a hard plastic resin. Example I-F is the highest Shore A hardness of this series and also has the hardest thermoplastic resin component (HDPE). Whereas binary mixtures of EVA and rubber such as Example IA yield low Shore A hardnesses. Example I-B through I-I show varying Shore A hardnesses due to the different thermoplastic resin components. However all of these ternary mixtures are harder than their binary (EVA and rubber) counterpart Example I-A. Generally these ternary mixtures also show greater elasticity than the counterpart binary DVA blend.

Examples II and III are ternary blends in which a thermoplastic resin and a EVA resin are combined with a single rubber component. In Examples II and III the Shore A hardness is controlled by varying the ratio of plastic to rubber. In Example II-J, Shore A hardness is controlled at 43. In Example II-K and Example III-N, Shore A hardness is controlled at 60. In Example II-L and Example III-O, the Shore A hardness is controlled at 50 and in Example II-M and Example III-P, Shore A hardness is controlled at 40. In Example II the Shore A hardness is controlled by varying the amount of EVA and LLDPE while also varying the ratio of total plastic to total rubber. In Example III the EVA component is kept relatively constant while the linear low density polyethylene (LLDPE) and the rubber components are varied.

In Example IV there are four ternary blends Q-T in which the Shore A hardness is controlled at 45, 60, 50, and 40 respectively. The Shore A hardness is controlled by varying the amount of each of the three primary components, i.e. EVA, LLDPE and EPDM. In each of the four Example IV blends the amount of rubber is much greater than the blends in Examples I-III. However the percent of plastic as a percentage of the total composition weight remains above 16% for each of these four examples.

As defined in Table III, the rod draw strength method quantitatively determines the melt integrity of the DVA materials. The rod draw value correlates well with the ability of the DVA material to be blow molded. The rod draw measurements also generally correlate well with the Shore A hardness measurements. For Examples II and III the rod draw is relatively constant except for Example III-P. Each of these examples except for Example III-P were able to be blow molded to a blow ratio of 4: 1. Similarly in Example IV each of the four examples were blow molded to a blow ratio of 4:1 which was predicted by the rod draw ratios ranging from 3.5 to 4.

Each of the Examples I - IV were blow moldable with the exception of Example III-P. It is believed that the concentration of plastic as a percentage of the total formulation weight is the critical factor in whether a DVA material can be blow molded. The examples show that all of the materials which can be blow molded have over 13% plastic based on the total formulation weight. Example III-P is an example of the material which does not blow mold at a 4:1 blow ratio and is composed of 12.6 wt% plastic. Similarly the examples show that each of the materials which have at least 34 wt% plastic as a percentage of the rubber and plastic composite weights can be blow molded. Whereas the materials having less than this percentage cannot be blow molded. Therefore it is theorized that the critical plastic concentration for blow molding X_{c} is approximated by: X_{c} ≈ 12.8% by weight of the total formulation and X_{c} = @ 30-32 % by weight based on the total polymer (rubber plus plastic). Materials with wide ranges of Shore A hardness have shown the ability to be blow molded when their plastic wt% are above this critical plastic concentration.

For purposes of this specification and the claims blow molding is defined as a process comprising the steps of: first producing a parison or preform, placing this parison or preform into a closed two plate mold, wherein the cavity in the mold represents the outside shape of the part to be produced, directing air into the heated parison or preform to blow it out against the mold cavity permitting the cooling of the expanded parison, and opening the mold and removing the rigid blow molded part. For purposes of the specification and claims a blow molded article is any article produced by the above described process.

The art of blow molding is well known in the art and for purposes of this specification, can be divided into two basic processes which differ only in the method of producing the plastic parison or preform. These two processes are first, extrusion blow molding in which the parison is formed by extrusion, i.e. by an extruder. In extrusion blow molding the DVA materials are melted by heat and transferred through the barrel of an extruder by the shearing action of an extruder screw. Helical flights of the screw change configuration along its length from input to output ends to assure a uniformally homogeneous melt. The screw turns continuously and feeds the melt through a die head as an endless parison.

Although for purposes of this invention extrusion blow molding is the preferred blow molding process, injection blow molding can also be utilized. In injection blow molding the DVA is melted in a reciprocating screw extruder and injected into a split steel mold cavity to produce a preformed parison. The preform shape is much like a test tube with a screw finish at the top. The preform is transferred on a core rod to the blow molding stage. At the blow molding stage the air or other gas is blown through the core rod to expand the conditioned preform against the mold cavity. The core rod can then be used to transfer the formed container or article to an injecting station. For purposes of the specification and claims of this Patent, a blow molded article is any article produced by extrusion blow molding or injection blow molding processes.

The ratio of the diameter of the finished blow molded article to that of the Parison or preform is defined as the blow ratio. Generally the blow ratio is in the range of 4:1. The exact value depending upon material, process and design details. For purposes of the specification and claims a DVA material is blow moldable when it is capable of being blow molded to a blow ratio of 4:1.

In blow molding the aforedescribed DVA composition in each of the Examples I-IV a Hayssen extrusion blow molder was utilized. The Hayssen blow molder was set up with a standard bellows mold. A blow mold ratio of 4:1 was used in each of the examples. Examples IV-Q to IV-S were first evaluated using two different wall thicknesses approximately 0.080 inches and 0.048 inches. The Example II(J-K) and Example III-N and III-P were evaluated in the second study using the identical mold and blow ratio. There were minor adjustments made to the equipment between the two studies which were expected to improve the blow molding of these materials. The blown bellows weighed between 70 grams and 100 grams. The melt temperatures of the DVA compositions ranged from 285°F to 405°F. These melting temperatures corresponded with the higher melting point of the thermoplastic resin components. The lower temperatures in this range were possible because of the lower melting temperatures of the linear low density polyethylene (LLDPE) as compared to polypropylene.

All of the examples were successfully blow molded with the exception of Example III-P, which could not be blow molded. Each of the examples produced fully blown formed bellows. Inch of the examples could be blown using thick and thin parisons corresponding to part weights of about 75 grams and 115 grams respectively. The examples indicated that it was relatively easy to blow mold the examples' material and the parison of each of the examples lined out with minimal adjustments. While blow molding the Example IV series it was observed that there was no sign of parison drooping in ally of the conditions used, including melt temperatures up to 385°F.

For purposes of evaluating the strength of the blow molded articles, the cooled blow molded bellows made from Example IV-Q material was filled with compressed air until it burst. This bellows had great toughness in the elongation, expanding considerably before failing.

Although the preferred process for manufacturing thermoelastic articles, including bellows, utilizes the blow molding processes described herein, alternative processes can also be utilized. These alternative processes include casting elastic film articles using cast processes well known in the art.

Although the invention has been described with reference to its preferred embodiments, those of ordinary skill in the art may, upon reading this disclosure appreciate changes and modifications which may be made which do not depart from the scope and the spirit of the invention as described above or claimed herein. In the foregoing description, certain terms have been used for brevity, clarity and understanding. However no unnecessary limitations can be implied therefrom because such terms are used for descriptive purposes and are intended to be broadly construed.

Having described the features, discoveries and principals of the invention, the manner in which it is constructed and the advantages and useful results obtained, the new and useful compositions, articles, elements, combinations, systems, operations and relationships as set forth in the appended claims.

## Claims

1. A thermoplastic elastomer composition comprising polyisoprene fully cured by dynamic vulcanization in a thermoplastic resin consisting essentially of:
(A) from 1 to 66.7 wt% of a ethylene copolymer resin selected from the group consisting of copolymers of ethylene with vinyl acetate, copolymers of ethylene with methyl acrylate, copolymers of ethylene with butyl acrylate, copolymers of ethylene with alpha, beta monoethylenically unsaturated monocarboxylic acids and copolymers of ethylene with alkyl esters of said acids and
(B) from 33.3 to 99 wt% of at least one additional polyolefin resin selected from a group consisting of high density polyethylene, linear low density polyethylene, low density polyethylene, very low density polyethylene, stereo-irregular polypropylene, styreric block copolymers or polypropylene.

2. The composition of claim 1 wherein the vulcanized polyisoprene comprises about 45 to 75 wt% of the resin/rubber composition.

3. The composition of claim 1 wherein an filler is incorporated therein.

4. The composition of claim 3 wherein the filler is inorganic.

5. The composition of claim 4 wherein the inorganic filler is calcium carbonate or clay.

6. The composition of claim 1 wherein the ethylene copolymer resin is an ethylene-vinyl acetate copolymer resin.

7. The composition of claim 6 wherein the vinyl acetate content of the copolymer is from about 2 to about 30 wt%.

8. The composition of claim 6 wherein the vinyl acetate content of the copolymer is from about 9 to about 29 wt%.

9. The composition of claim 1 wherein the ethylene copolymer resin is an combination of an ethylene-vinyl acetate copolymer resin and an ethylene-methyl acrylate resin.

10. The composition of claim 1 wherein the thermoplastic concentration is greater than 12.8 wt% of the total composition.

11. The composition of claim 1 wherein the thermoplastic concentration is greater than 30 wt% of the resin/rubber component of the composition.

12. The composition of claim 1 wherein the polyolefin resin is linear low density polyethylene.

13. A blow molded article comprising the composition of claim 1.

14. A casted article comprising the composition of claim 1.

15. An elastic film comprising the composition of claim 1.

16. A material with the composition of claim 1 wherein the hardness is less than 70 Shore A, and greater than 30 Shore A.

17. The material of claim 16, wherein said material is blow moldable.

18. A method for blow molding an article by pressurizing a parison or preform of a composition according to claim 1.

19. A method for injection molding an article by injecting a mold with a composition according to claim 1.

20. The composition of claim 1 wherein (B) consists of 33.3 to 99 wt% of at least one additional resin or combinations thereof selected from a group consisting of high density polyethylene, linear low density polyethylene, very low density polyethylene, or polypropylene.

21. A process for preparing a DVA composition comprising the steps of:
blending a thermoplastic resin consisting essentially of:
(A) from 1 to 66.7 wt % of a ethylene copolymer resin selected from the group consisting of copolymers of ethylene with vinyl acetate, copolymers of ethylene with methyl acrylate, copolymers of ethylene with alpha, beta monoethylenically unsaturated monocarboxylic acids, copolymers of ethylene with butyl acrylate, and copolymers of ethylene with alkyl esters of said acids, and
(B) from 33.3 to 99 wt% of at least one additional polyolefin resin selected from a group consisting of high density polyethylene, linear low density polyethylene, low density polyethylene, very low density polyethylene, stereo-irregular polypropylene, styrenic block copolymers or polypropylene, and
polyisoprene at a temperature above the melting point of the resin;
adding a cure system for the rubber to the resin/rubber blend; and
vulcanizing the rubber under dynamic vulcanization conditions for a time sufficient to fully vulcanize the rubber.

22. A blow molded article composed of a material made according to claim 21.

23. The process of claim 21 further comprising the step of blow molding said DVA composition.

24. A process for preparing a blow molded article comprising the steps of:
forming a DVA composition by the steps of:
blending a thermoplastic resin consisting essentially of:
(A) from 1 to 66.7 wt% of a ethylene copolymer resin selected from the group consisting of copolymers of ethylene with vinyl acetate, copolymers of ethylene with methyl acrylate, copolymers of ethylene with alpha, beta monoethylenically unsaturated monocarboxylic acids, copolymers of ethylene with butyl acrylate, and copolymers of ethylene with alkyl esters of said acids, and
(B) consisting of 33.3 to 99 wt% of at least one additional polyolefin resin selected from a group consisting of high density polyethylene, linear low density polyethylene, low density polyethylene, very low density polyethylene, stereo-irregular polypropylene, styrenic block copolymers or polypropylene, and
polyisoprene at a temperature above the melting point of the resin;
adding a cure system for the rubber to the resin/rubber blend;
vulcanizing the rubber under dynamic vulcanization conditions for a time sufficient to fully vulcanize the rubber;
blow molding said article from said dynamically vulcanized composition.

25. The process of claim 24, wherein the blow molding step comprises forming a parison or preform from said dynamically vulcanized composition, and inflating said parison or preform within a mold.

26. The process of claim 25 further comprising the step of continuing inflation of said parison or preform until the diameter of said inflated parison or preform is four times greater that the original diameter of the parison or preform.

27. A thermoplastic elastomer composition comprising a rubber selected from the group consisting of EPDM, polyisoprene, butyl rubber, chloroprene rubber, chlorosulphonated polyethylene rubber, silicone rubber, ethylene-propylene rubber and halogenated rubbers, fully cured by dynamic vulcanization in a thermoplastic resin consisting of:
(A) from 0 to 66.7 wt% of a ethylene copolymer resin selected from the group consisting of copolymers of ethylene with vinyl acetate, copolymers of ethylene with methyl acrylate, copolymers of ethylene with butyl acrylate, copolymers of ethylene with alpha, beta monoethylenically unsaturated monocarboxylic acids and copolymers of ethylene with alkyl esters of said acids and
(B) consisting of 33.3 to 100 wt% of at least one additional polyolefin resin selected from a group consisting of high density polyethylene, linear low density polyethylene, low density polyethylene, very low density polyethylene, stereo-irregular polypropylene, styrenic block copolymers or polypropylene; and
wherein said composition is blow moldable.

28. The composition of claim 27 wherein the hardness of said composition is between 35 Shore A and 72 Shore A.

29. The composition of claim 27 wherein the rubber is EPDM.

30. The composition of claim 27 wherein the composition is blow moldable to a 4:1 blow ratio.

31. The composition of claim 28 wherein the composition is blow moldable to a 4:1 blow ratio.

32. The composition of claim 27 wherein the thermoplastic concentration is greater than 12.8 wt % of the total composition.

33. The composition of claim 27 wherein the thermoplastic concentration is greater than 30 wt% of the resin/rubber component of the composition.
